(19) Europäisches Patentamt
European Patent Office
Office européen des brevets

(11) **EP 3 357 109 B1**

(12) **EUROPEAN PATENT SPECIFICATION**

(45) Date of publication and mention
of the grant of the patent:
**05.02.2020 Bulletin 2020/06**

(21) Application number: **16874876.2**

(22) Date of filing: **15.12.2016**

(51) Int Cl.:
*H01M 2/14* (2006.01)     *H01M 2/16* (2006.01)
*D01D 5/00* (2006.01)     *D01F 6/74* (2006.01)
*H01M 10/052* (2010.01)     *D01F 6/18* (2006.01)
*D01F 6/76* (2006.01)

(86) International application number:
**PCT/CN2016/110149**

(87) International publication number:
**WO 2017/101819 (22.06.2017 Gazette 2017/25)**

(54) **COMPOSITE FILM, METHOD FOR PREPARING THE SAME AND LITHIUM BATTERY COMPRISING SAID COMPOSITE FILM**

VERBUNDFOLIE, VERFAHREN ZUR HERSTELLUNG DERSELBEN UND LITHIUMBATTERIE DIESE UMFASSEND

FILM COMPOSITE, SON PROCÉDÉ DE PRÉPARATION ET BATTERIE AU LITHIUM LE COMPORTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2015   CN 201510955330**

(43) Date of publication of application:
**08.08.2018   Bulletin 2018/32**

(73) Proprietor: **BYD Company Limited**
**Shenzhen, Guangdong 518118 (CN)**

(72) Inventors:
• **FENG, Dali**
**Shenzhen,**
**Guangdong 518118 (CN)**
• **SONG, Wei**
**Shenzhen,**
**Guangdong 518118 (CN)**
• **HU, Jialing**
**Shenzhen,**
**Guangdong 518118 (CN)**
• **JIN, Lina**
**Shenzhen,**
**Guangdong 518118 (CN)**
• **SHAN, Jun**
**Shenzhen,**
**Guangdong 518118 (CN)**
• **HE, Long**
**Shenzhen,**
**Guangdong 518118 (CN)**

(74) Representative: **Hoffmann Eitle**
**Patent- und Rechtsanwälte PartmbB**
**Arabellastraße 30**
**81925 München (DE)**

(56) References cited:
**EP-A1- 2 169 743          WO-A1-2008/018657**
**WO-A2-2014/100213          CN-A- 102 422 462**
**JP-A- 2002 355 938          JP-B2- 5 486 754**
**KR-A- 20140 067 370          US-A- 5 296 172**
**US-A1- 2011 236 744          US-A1- 2014 272 526**
**US-A1- 2014 287 296**

**Description**

**FIELD**

The present disclosure generally relates to a field of lithium battery, especially relates to a composite film, a method of preparing the same and a lithium battery having the same.

**BACKGROUND**

Lithium battery is mainly made up of positive/negative electrode materials, an electrolyte, a separator and a shell packaging material. The separator is an important component of the lithium battery, it separates the positive electrode and the negative electrode of the lithium battery to avoid an internal short circuit and allow electrolyte ions passing freely so as to realize electrochemical charging/discharging. The property of the separator is a key factor which may have an influence on an interface structure and internal resistance of the battery, thus affecting a capacity, a cycle performance and a safety performance of the battery. The separator having excellent performance plays an important role for improving a comprehensive performance of the battery. Therefore, the separator is called as a "third electrode" of the battery.

However, a conventional separator generally has a poor thermostablity. A method of preparing a composite film as a separator is provided in the art, which includes spinning on a polyethylene (PE) microporous film having an ultra-high molecular weight to form a fiber layer, the fiber layer contains polyvinylidene fluoride or polyacrylonitrile (PAN), the fiber layer is tightly combined with a polyethylene microporous layer after being hot rolled, thus obtaining the composite film. Such composite film may have a good effect when it is used as a lithium battery separator, and a solvent used includes acetone, N'N-dimethylformamide (DMF) or N'N-dimethyl acetamide (DMAc).

However, there is no obvious improvement for the thermostability of the composite film obtained by the method mention above.

Separators which comprise a porous substrate made of polyolefin or cellulose fibers which is coated by a fibrous layer made of a heat resistant polymer through an electrospinning process are known from WO 2008/018657, US 2011/0236744, KR 2014-0067370 and WO 2014/100213.

US 2014/0287296, US 2014/0272526 and EP 2169743 each describe a separator for non-aqueous secondary battery comprising a non-woven membrane or support and a polymer coating layer.

According to JP 2002-355938 a composite film is described comprising a polyolefin microporous film and provided thereon a coating layer made of a porous material of a heat-resistant polymer.

WO 2010/130339 describes an electrochemical cell having a separator which represents a layer of an inorganic substance and which is coated on one or both sides with a polyetherimide.

**SUMMARY**

The present disclosure seeks to solve at least one of the technical problems in the related art to some extent. Therefore, the present disclosure provides a composite film.

According to a first aspect of the present disclosure, a composite film is provided. The composite film includes a porous separator and a fiber layer disposed on a surface of the porous separator and containing polyetherimide, wherein the fiber layer includes at least one group of fiber bundle, the fiber bundle includes multiple fibers parallel to each other.

According to a second aspect of the present disclosure, a method of preparing a composite film is provided. The method includes steps of:

> S1) providing a porous separator;
> S2) providing a spinning solution including a solvent, and a spinning polymer dissolved in the solvent and including polyetherimide; and
> S3) preparing a fiber layer on the porous separator by using the spinning solution and drying the fiber layer to obtain the composite film comprising the porous separator and the fiber layer disposed on the porous separator.

According to a third aspect of the present disclosure, a lithium battery is provided. The lithium battery includes a positive electrode, a negative electrode and the composite film mentioned above, the composite film is disposed between the positive electrode and the negative electrode.

The composite film of the present disclosure may have an excellent thermostability, and when the composite film of the present disclosure is used as a lithium battery separator, it won't swell and absorb fluid, thus maintaining a good polymer morphology. A stability in use of the composite film may be greatly improved, thus to guarantee the performance of the lithium battery.

## DETAILED DESCRIPTION

Embodiments of the present disclosure are described in detail below, and examples of the embodiments are shown in accompanying drawings. The following embodiments described by referring to the accompanying drawings are illustrative, aim at explaining the present disclosure, and should not be interpreted as limitations to the present disclosure.

According to embodiments of the present disclosure, a composite film is provided. The composite film includes a porous separator and a fiber layer disposed on a surface of the porous separator, the fiber layer contains polyetherimide, wherein the fiber layer includes at least one group of fiber bundle, the fiber bundle includes multiple fibers parallel to each other.

It should be noted that the porous separator may be a polyolefin separator. The polyolefin separator is a commonly used separator in lithium battery, for example, a polypropylene (PP) separator, a polyethylene (PE) separator, and a PE/PP/PE three layers separator, etc.

In embodiments of the present disclosure, the fiber layer is disposed on a surface of the porous separator, and the fiber layer contains polyetherimide. Through intensive experiments, the inventors found that the fiber layer formed by polymer containing polyetherimide may improve a thermostability of the composite film effectively.

Specifically, in some embodiments, the fiber layer may be directly made of polyetherimide; or the fiber layer may be made of a mixture of polyetherimide and an auxiliary polymer, that is the fiber layer contains polyetherimide and the auxiliary polymer.

In some embodiments, the fiber layer contains polyetherimide and an auxiliary polymer. It should be noted that, under this circumstance, it is possible that one fiber contains polyetherimide and auxiliary polymer or each fiber only contains one of the materials, and the fiber layer includes a first fiber containing polyetherimide and a second fiber containing the auxiliary polymer.

In embodiments of the present disclosure, the auxiliary polymer is at least one selected from a group consisting of polyacrylonitrile, copoly(ether ether ketone), polyether sulfone, polyamide-imide, polyamide acid, and polyvinylpyrrolidone. When the auxiliary polymer is used together with polyetherimide, a binding force between the fiber layer and the porous separator may be effectively improved, which is beneficial for the functioning of polyetherimide, so as to improve the thermostability of the composite film.

In some embodiments, the fiber layer contains 15 wt% to 100 wt% of polyetherimide and 0 wt% to 85 wt% of the auxiliary polymer, then, the thermostability of the composite film may be effectively improved. In some embodiments, the fiber layer contains 50 wt% to 80 wt% of polyetherimide and 20 wt% to 50 wt% of the auxiliary polymer. Then, bonding strength between the fiber layer and the porous separator may be improved, and the thermostability of the composite film may be further improved.

It should be noted that there are no particular limitations for the size of a fiber in the fiber layer. In some embodiments, the fiber in the fiber layer has a diameter of 100 nanometers to 2000 nanometers. In some embodiments, the fiber layer has a thickness of 0.5 microns to 30 microns, then the porous separator may be effectively bonded with a positive electrode and a positive electrode, so as to improve a cycle performance of a battery.

In some embodiments, the fiber layer has a porosity of higher than 75%. In some embodiments, the fiber layer has a porosity of 75% to 93%. The fiber layer has a high porosity, which may effectively ensure an ionic conductivity of the composite film.

In some embodiments, the fiber layer has an areal density of 0.2 $g/m^2$ to 15 $g/m^2$. It should be noted that "areal density" refers to a mass of a coating material coated on unit area of a substrate. With the "areal density", a quantity of the coating material coated on the substrate can be obtained. It should be noted that the porosity of the fiber layer may be obtained by calculating from the areal density, the thickness, and a noumenal density of the polymer. It should be noted that the noumenal density of the polymer refers to a density of the polymer solid itself. In embodiments of the present disclosure, when the areal density of the fiber layer is within the range above, an ionic conductivity of the composite film may be assured, ionic migration won't be influenced, and the composite film may have a good adhesive property, so as to improve the safety performance of the battery.

According to the present invention, fibers in the fiber layer have a certain orientation and are regularly distributed. Specifically, the fiber layer includes at least one group of fiber bundle, the fiber bundle includes multiple fibers parallel to each other. For example, if the fiber layer includes only one group of fiber bundle, the fibers in the fiber layer have a same orientation. In some embodiments, the fiber layer includes multiple groups of fiber bundles, the multiple groups of fiber bundles intersect with each other or are parallel to each other. For example, in one embodiment, the fiber bundle in the fiber layer is vertical to another, that is, the fibers in the fiber layer are distributed in an orthogonality manner.

A fiber layer prepared by a traditional electrostatic spinning process has a poor mechanical performance. Through intensive experiments, the inventors found that the fibers in the fiber layer obtained by traditional electrostatic spinning process are disorderly deposited on the separator, the fibers in the fiber layer have no certain orientation, and are in a loose accumulation state. It should be noted that, through analysis, when the fibers, in a loose accumulation state, are applied under an external force, sliding between fibers is easily occurred, which may result in a poor mechanical performance of the fiber layer.

While in the composite film of the present disclosure, the fiber layer includes a fiber bundle, and the fiber bundle includes multiple fibers which are straight and extend in a same direction. Since the fibers are parallel to each other and extend in a same direction in a straight state, the fibers have a certain orientation. When the fiber layer is applied under an external force in such orientation direction, relative sliding between fibers in a straight state may not occur due to a tension of the fibers themselves, which is against to an external pull force. In a macroscopic view, the fiber layer may have excellent mechanical strength.

The fibers regularly distributed in the fiber layer may be beneficial for improving a hot shrinkage performance of the composite film and improving a mechanical performance of the composite film. Especially when the fibers are distributed in the fiber layer in an orthogonality manner, a hot shrinkage performance and a mechanical performance of the composite film in each of a lateral direction and a longitudinal direction may be improved.

It should be noted that, in embodiments of the present disclosure, the fibers are distributed in the fiber layer in an orthogonality manner means that a large number of fibers are distributed in a lateral direction and a longitudinal direction, and the fibers distributed in the lateral direction are vertical to the fibers distributed in the longitudinal direction.

It should be noted that the fiber layer may be disposed on one side of the porous separator, and also, the fiber layer may be disposed on each of two sides of the porous separator. In one embodiment, the fiber layer is disposed on each of two surfaces of the porous separator.

In some embodiments, the composite film further includes an inorganic particle layer disposed between the fiber layer and the porous separator. Specifically, in some embodiments, the inorganic particle layer includes inorganic particles and an adhesive.

In some embodiments, the inorganic particles include at least one selected from a group consisting of $Al_2O_3$ ($\alpha$-$Al_2O_3$, $\beta$-$Al_2O_3$, or $\gamma$-$Al_2O_3$), $SiO_2$, $BaSO_4$, $TiO_2$ (for example, rutile or anatase), $CuO$, $MgO$, $LiAlO_2$, $ZrO_2$, carbon nanotube (CNT), $BN$, $SiC$, $Si_3N_4$, $WC$, $BC$, $AlN$, $Fe_2O_3$, $BaTiO_3$, $MoS_2$, $\alpha$-$V_2O_5$, $PbTiO_3$, $TiB_2$, $CaSiO_3$, molecular sieve ZSM-5, clay and kaolin. In some embodiments, the inorganic particles include at least one selected from a group consisting of $Al_2O_3$, $SiO_2$ or $BaSO_4$.

In some embodiments, the inorganic particles include $Al_2O_3$, especially $\alpha$-$Al_2O_3$, so that the inorganic particles have an excellent thermal insulation and an electrochemical stability, which may facilitate to improve a thermostability of the composite film, thus to improve safety performance of the battery. In some embodiments, the inorganic particles include $SiO_2$ or $BaSO_4$, so that a thermostability of the composite film may be improved.

Through intensive experiments, the inventors found that, with the inorganic particle layer disposed on the surface of the porous separator, a compatibility between the fiber layer and the inorganic particle layer is better than the compatibility between the fiber layer and the porous separator. In addition, the inorganic particle layer has an irregularity surface containing a plenty of particle protrusions, which may provide more attachment points for the fibers in the fiber layer, thus to improve adhesion strength between the fiber layer and the inorganic particle layer. Therefore, the fiber layer may easily combine the positive/negative electrode and the separator to form a whole. Besides, with the inorganic particle layer, the composite film may have a good dimensional stability and a high thermal shrinkage resistance performance. When the fiber layer has an excellent adhesion performance, a hardness of the obtained lithium battery may be improved, and electrode plate may not be easily deformed during cycling, thus obtaining a high safety performance. In addition, with the inorganic particle layer, strength of the porous separator and an affinity with electrolyte of the porous separator may be improved.

In some embodiments, the inorganic particle has a particle size of about 50 nanometers to about 3 microns. The inventor found that when the particle size of the inorganic particle is within above range, on one hand, the porous polyolefin separator may be prevented from being blocked by the inorganic particle, thus the lithium ion may pass the porous polyolefin separator smoothly. On the other hand, a thickness of the inorganic particle may be easily regulated, thus to effectively improve mechanical strength and a thermostability of the composite film, then a safety performance of the battery may be improved. It should be noted that the adhesive is configured to adhere the inorganic particles and the porous separator. In some embodiments, the adhesive is soluble in organic solvents or deionized water. For example, the adhesive is at least one selected from a group consisting of polyvinylidene fluoride (PVDF), poly(vinylidene fluoride-hexafluoropropylene) (P(VDF-HFP)), polymethyl methacrylate (PMMA), polyacrylonitrile (PAN), polyimide (PI), polyvinylpyrrolidone (PVP), polyoxyethylene (PEO), polyvinyl alcohol (PVA), carboxymethylcellulose (CMC) and styrene butadiene rubber (SBR).

In some embodiments, a weight ratio of the inorganic particles to the adhesive in the inorganic particle layer is about 9:1 to 24:1.

It should be noted that a thickness of the inorganic particle layer may be regulated by one with ordinary skills in the art in a relatively larger range according to actual needs. In some embodiments, the inorganic particle layer has a thickness of about 0.5 microns to about 3 microns. Within such range of a thickness of the inorganic particle layer, mechanical strength and a thermal shrinkage resistance of the porous separator may be effectively improved, and a lithium ion migration speed of the composite film may be effectively guaranteed, which is beneficial for an electrical performance of the battery.

In some embodiments, the fiber layer is disposed on each of two sides of the porous separator, similarly, in some embodiments, the inorganic particle layer is disposed on each of two surfaces of the porous separator. In these embodiments, the inorganic particle layer is disposed between the fiber layer and the porous separator.

The present disclosure further provides a method of preparing a composite film described above, comprising steps of:

S1) providing a porous separator;
S2) providing a spinning solution including a solvent, and a spinning polymer dissolved in the solvent and including polyetherimide; and
S3) preparing a fiber layer on the porous separator by using the spinning solution and drying the fiber layer to obtain the composite film including the porous separator and the fiber layer disposed on the porous separator.

In embodiments of the present disclosure, in step S1, the porous separator is provided as a substrate. The subsequent operation is carried out on the surface of the porous separator. As mentioned above, the porous separator maybe a commonly used polyolefin separator.

In step S2, the spinning solution is provided. The spinning solution includes a solvent and a spinning polymer dissolved in the solvent, the spinning polymer includes polyetherimide.

In embodiments of the present disclosure, the spinning polymer may be polyetherimide, then the fiber layer obtained via electrostatic spinning is made of polyetherimide. Otherwise, the spinning polymer may be a mixture of polyetherimide and an auxiliary polymer. In some embodiments, the auxiliary polymer is at least one selected from a group consisting of polyacrylonitrile, copoly(ether ether ketone), polyether sulfone, polyamide-imide, polyamide acid, and polyvinylpyrrolidone.

Specifically, in some embodiments, when electrostatic spinning with polyetherimide and the auxiliary polymer, the polyetherimide and the auxiliary polymer are dissolved separately to form different spinning solutions, and the different spinning solutions containing the polyetherimide and the auxiliary polymer respectively are electrostatic spun at the same time. Then a spinning layer formed contains fibers of polyetherimide and fibers of the auxiliary polymer.

It should be noted that, the polyetherimide and the auxiliary polymer may be mixed firstly to form a spinning solution containing different polymers, followed by being electrostatic spun. Then a spinning layer formed contains fibers of a mixture of polyetherimide and the auxiliary polymer.

In some embodiments of the present disclosure, in order to have a simple process, the polyetherimide and the auxiliary polymer are dissolved separately to form different spinning solutions.

When the polyetherimide and the auxiliary polymer may be mixed to form a spinning solution, in some embodiments, a weight ratio of the polyetherimide to the auxiliary polymer is about 50-80:20-50. Then, the adding of the auxiliary polymer won't result in reducing a thermostability of the composite film, on the contrary, when the weight ratio of the polyetherimide to the auxiliary polymer is within above range, a bonding force between the porous film and a spinning layer obtained may be effectively improved, thus to further improve thermostability of the composite film.

The solvent in the spinning solution is configured to dissolve the spinning polymer, so that the subsequent electrostatic spinning process may be carried out smoothly. In some embodiments of the present disclosure, the solvent is at least one selected from a group consisting of N-methyl pyrrolidone, N'N-dimethylformamide, N'N-dimethyl acetamide, methylbenzene, acetone, and deionized water.

In embodiments of the present disclosure, the spinning solution is provided to prepare the fiber layer via electrostatic spinning in consequent steps. Thus, it should be noted that a concentration of a spinning polymer in the spinning solution may be within a common concentration range so that the spinning solution may be spun via electrostatic spinning. In some embodiments, the spinning polymer has a concentration of about 3 wt% to about 30 wt% in the spinning solution. For example, the spinning polymer has a concentration of about 8 wt% to about 20 wt% in the spinning solution. It should be noted that, when a relative molecular mass of the polymer is constant and other conditions are certain, the concentration of the spinning solution is a conclusive factor that influences intertwining of a molecular chain in the solution. It should be noted that a polymer solution may be divided into three kinds of solutions according to concentration and the molecular chain morphology of the polymer solution, namely a dilute solution, a semi-dilute solution, and a concentrated solution. In the dilute solution, the molecular chains are separated from each other and distributed evenly, along with increasing of the concentration, the molecular chains overlap with each other, and an entanglement may occurs. A boundary concentration of the dilute solution and the semi-dilute solution is called as an overlap concentration, which means that, along with increasing of the concentration, the molecular chains have a trend to contact with each other and then overlap with each other, and a boundary concentration of the semi-dilute solution and the concentrated solution is called as an entanglement concentration, which means that, along with increasing of the concentration, the molecular chains have a trend to overlap with each other and entangle with each other. In embodiments of the present disclosure, when the concentration of the spinning solution is within the above range, a spinning performance may be effectively ensured. In addition, along with the increasing concentration of the spinning solution, a entanglement degree is increased, and then the spinning performance is better. It should be noted that, when electrostatic spinning with different spinning solution containing different polymer, concentration of each spinning solution is dependently within the above range.

In step S3, the fiber layer is prepared on the porous separator by using the spinning solution. In some embodiments, the fiber layer is prepared via electrostatic spinning. It should be noted that the method of electrostatic spinning is known by those skilled in the art, for example, by regulating spinning parameters such as receiving a distance, a temperature, a humidity, a speed of needle, a voltage, a flow velocity and a rotate speed of roller, so that electrostatic spinning may be carried out on the surface of the porous separator.

With the method mentioned above, a composite film of the present disclosure may be prepared. Since polyetherimide is used as the spinning polymer, a thermostability of the composite film may be improved. Especially, when a mixture of the polyetherimide and the auxiliary polymer is used as the spinning polymer, an excellent adhesion performance of the fiber layer may be ensured at the same time, which is beneficial to combine the separator and the positive/negative electrode.

It should be noted that there are two ways of electrostatic spinning, namely spinning with needle and spinning without needle, and the present disclosure may use both ways of electrostatic spinning. For example, in some embodiments, spinning with needle is used, a flow velocity of spinning solution is about 0.3 to about 5 mL/h, a spinning temperature is about 25 Celsius degrees to about 70 Celsius degrees, a spinning humidity is about 10% to about 60%, and a voltage difference between the needle and the roller is about 5 kV to about 20 kV.

In the present disclosure, when the flow velocity of spinning solution is within the above range, an applicable diameter of fiber may be obtained, and the needle may be prevented from being blocked so that the spinning process may be carried out. Especially, when a mixed solution is used, and the flow velocity of spinning solution is controlled to be within the above range, the fiber layer thus obtained may have an excellent porosity and adhesive performance. When the spinning temperature and the spinning humidity are within the above range, and the mixed solvent is used, the fiber smoothly obtained by spinning may be dried, thus the fibers may be prevented from being adhered, so as to improve a porosity of the fiber layer, and also, an adhesive performance of the fiber layer may be prevented from being declined. And when the voltage is within the above range, the spinning solution may be easily activated to form a jet flow, so as to generate an effective stretching effect in the electric field. In such a way, fibers with applicable diameter may be obtained, so that the morphology the formed fibers may be guaranteed, which may be beneficial for improving porosity and adhesive performance of the fiber layer.

In some embodiments, the fiber layer is prepared via a high speed electrostatic spinning method or an auxiliary electric field electrostatic spinning method. With the high speed electrostatic spinning method or auxiliary electric field electrostatic spinning method, a fiber layer with straightly orientated fibers inside may be prepared on the surface of the porous film.

Specifically, the high speed electrostatic spinning method includes: electrostatic spinning under a condition that a collecting device configured for collecting fiber has a rotation speed of about 1000 rpm to about 6000 rpm. If a linear velocity of the surface of the collecting device is too small, the fiber thus formed may be distributed on the surface of the collecting device in a random accumulation state because the fast moving jet flow has a disorder state, the fiber layer thus obtained may have poor mechanical strength. While when the linear velocity of the surface of the collecting device reaches a certain level, the fiber thus formed may stick to the surface of the collecting device in a circumference manner tightly, and a sedimentary direction of the fiber is the same and generally in a straight state, that is, the fiber bundle thus formed is straight and extends in a same direction. On the other hand, when the linear velocity of the surface of the collecting device is overly high, the fiber jet flow may be destroyed by an overly high receiving speed, then a continued fiber won't be obtained.

Through continuous experiment on common electrostatic spinning process, the inventors found that, when the rotation speed of the collecting device is about 1000 rpm to about 6000 rpm, a fiber bundle straight and extended in a same direction may be obtained. In some embodiments, the rotation speed of the collecting device is about 1000 rpm to about 2000 rpm, the fiber in the obtained fiber layer may have a better configuration, which may be more beneficial for improving mechanical strength of the fiber layer.

When the rotation speed of the collecting device is about 1000 rpm to about 6000 rpm, other process method of the high speed electrostatic spinning may be any commonly used process method. For example, by regulating spinning parameters, such as a receiving distance, a temperature, a humidity, a speed of needle, a voltage difference between the needle and the collecting device, a flow velocity and a rotate speed of collecting device, electrostatic spinning may be carried out on the surface of the porous separator. It should be noted that there are two ways of electrostatic spinning, namely spinning with needle and spinning without needle, and the present disclosure may use both ways of electrostatic spinning. Generally, in electrostatic spinning, the collecting device configured for collecting fiber includes a roller or a receiving plate. It is well known by those skilled in the art that a rotatable collecting device usually is a roller. Thus, in some embodiments, the rotate speed of collecting device means a rotate speed of a roller which is used as a collecting device.

In embodiments of the present disclosure, the specific high speed electrostatic spinning method may be electrostatic spinning with needle or electrostatic spinning without needle. When electrostatic spinning with needle is used, a flow velocity of spinning solution is about 0.3 to about 5 mL/h, a spinning temperature is about 25 Celsius degrees to about 70 Celsius degrees, a spinning humidity is about 10% to about 60%, and a voltage difference between the needle and the roller is about 5 kV to about 20 kV.

In embodiments of the present disclosure, when the flow velocity of spinning solution is within the above range, an applicable diameter of fiber may be obtained, and the needle may be prevented from being blocked so as to ensure the spinning process may be carried out well. When the voltage is within the above range, the spinning solution may be easily activated to form a jet flow, so as to generate an effective stretching effect in the electric field. Then a fiber with applicable diameter may be obtained, a configuration of the fiber may be guaranteed, which may be beneficial for improving porosity and adhesive performance of the fiber layer.

When an electrostatic spinning without needle is used, as stated above, spinning temperature is about 25 Celsius degrees to about 70 Celsius degrees, the spinning humidity is about 10% to about 60%, a moving speed of solution bath is about 0 to 2000 millimeter/sec, a voltage of a source end for generating fiber is about 0 to 150 kV, a voltage of collecting device is about -50 kV to 0 kV, and a voltage difference between the source end and the collecting device is about 20 to 200 kV.

In some embodiments, the auxiliary electric field electrostatic spinning method includes: setting an auxiliary electrode on an end, far away from a source end for generating fiber, of a collecting device, wherein the collecting device has a voltage of about -60 kV to about 0 kV, the auxiliary electrode has a voltage lower than or equal to -60 kV, and a voltage difference exists between the auxiliary electrode and the collecting device; and electrostatic spinning.

The auxiliary electrode includes multiple metal electrode plates parallel to and fixed to each other. In some embodiments, the metal electrode plate has a length of about 10 millimeters to about 1000 millimeters and a width of about 1 millimeter to about 500 millimeters. In some embodiments, a distance between two adjacent metal electrode plates is about 1 millimeter to about 500 millimeters. In some embodiments, a distance between the auxiliary electrode and the collecting device is about 1 millimeter to about 1000 millimeters.

Alternatively, the auxiliary electric field electrostatic spinning method may include: taking an area between the source end for generating fiber and the collecting device as a spinning area, the spinning area is disposed between two charged planes that parallel to each other, the two charged planes is disposed in a direction from the source end to the collecting device, a voltage difference between the two charged planes is lower than or equal to 60 kV, and then electrostatic spinning.

With the two auxiliary electric field electrostatic spinning methods mentioned above, an additional electric field is formed between the spinning areas, then a motion morphology of fiber in the spinning areas may be changed, such that the fibers are distributed regularly on the collecting device, and the fiber in the fiber bundle thus obtained is straight and extends in a same direction.

In some embodiments, the auxiliary electric field electrostatic spinning method is used, similar to the high speed electrostatic spinning method, other conditions of electrostatic spinning method are the same as common electrostatic spinning method. As stated above, for example, both spinning with needle and spinning without needle may be used. In addition, when the auxiliary electric field electrostatic spinning method is used, the collecting device may be a receiving plate, or a rotatable roller. When a rotatable roller is used as a collecting device, it should be noted that the rotation speed of the roller may be any common rotation speed (for example, smaller than 1000rpm). In some embodiments, the roller has a high rotation speed (for example, 1000-6000rpm). Then a combined action of the high speed electrostatic spinning and the auxiliary electric field electrostatic spinning may be realized, so as to further improve mechanical property of the obtain fiber layer.

When spinning with needle is used, a flow velocity of spinning solution is about 0.3 to about 5 mL/h, a spinning temperature is about 25 Celsius degrees to about 70 Celsius degrees, a spinning humidity is about 10% to about 60%, and a voltage difference between the needle and the collecting device is about 5 kV to about 20 kV. For example, in some embodiments, a flow velocity of spinning solution is about 0.6 to about 2.0 mL/h, a spinning temperature is about 30 Celsius degrees to about 50 Celsius degrees, a spinning humidity is about 20% to about 50%, and a voltage difference between the needle and the roller is about 8 kV to about 15 kV.

When an electrostatic spinning without needle is used, as stated above, the spinning temperature is about 25 Celsius degrees to about 70 Celsius degrees, the spinning humidity is about 10% to about 60%, a moving speed of solution bath is about 0 to 2000 millimeter/sec, a moving speed of the collecting device is about 0 to 20000 millimeter/min (the collecting device is configured as a plate, which doesn't rotate), alternatively, when the collecting device is a roller, a rotation speed of the collecting device is about 1000 rpm to 6000 rpm, a voltage of a source end for generating fiber is about 0 to 150 kV, a voltage of collecting device is about -50 kV to 0 kV, and a voltage difference between the source end and the collecting device is about 20 to 200 kV.

With the method mentioned above, a fiber bundle which is straight and extends in a same direction may be prepared on the surface of the porous separator. When other conditions are constant, the fibers on the surface of the porous separator may have a same orientation. The fiber layer obtained includes multiple groups of fiber bundles, the multiple group of fiber bundles are parallel to each other.

In some embodiments, after a fiber bundle is formed on the porous separator via the high speed electrostatic spinning method or the auxiliary electric field electrostatic spinning method, the porous separator is rotated, and then the high speed electrostatic spinning method or auxiliary electric field electrostatic spinning method is continuously performed. Then two fiber bundles with different orientations may be obtained; and mechanical strength of the fiber layer may be further improved. In some embodiments, according to actual needs, the above steps is repeated at least once to prepare the fiber layer on the porous separator, the fiber layer includes multiple groups of fiber bundles, the multiple groups of fiber bundles have different orientations. It should be noted that a manner of rotating the porous separator may be regulated according to actual needs. For example, the porous separator may be first detached from the collecting device, then the porous separator is rotated and fixed to the collecting device, therefore, the porous separator is rotated without changing position of the collecting device, or the collecting device may be rotated so as to rotate the porous separator.

It should be noted that a rotation angle of the porous separator may be regulated according to actual needs or the needed amount of fiber bundles. In some embodiments, the rotation angle of the porous separator is about 30 degrees to 90 degrees.

Through intensive experiments, the inventors found that, when the concentration of the spinning solution is within the above range, with the above electrostatic spinning method, a well matching between an evaporation speed of solvent and a fiber forming speed may be realized, thus a fiber layer with a good morphology, a high adhesion and a better adhesion between fibers in the fiber layer may be obtained, and the fiber layer has a porosity higher than 75%. In some embodiments, the fiber layer has a porosity of about 75% to about 93%.

As stated above, the fiber layer obtained by the above mentioned electrostatic spinning method may have a regular orientation distribution, which is beneficial for improving mechanical property of the fiber layer, thus to ensure excellent mechanical strength to the composite film.

In embodiments of the present disclosure, the fiber diameter and thickness of the fiber layer may be varied in a relatively large range, which may be modified by controlling specific process conditions. In some embodiments, the fiber in the fiber layer has a diameter of about 100 nanometers to about 2000 nanometers, and the fiber layer has a thickness of about 0.5 microns to about 30 microns.

In some embodiments, the fiber layer has an areal density of about 0.2 $g/m^2$ to about 15 $g/m^2$.

In embodiments of the present disclosure, the electrostatic spinning may be carried out on one side of the porous separator, and also, the electrostatic spinning may be carried out on each of two sides of the porous separator. In some embodiments, in step S3, the fiber layer is prepared on each of two side surfaces of the porous separator via electrostatic spinning. For example, in some embodiments, a fiber layer is firstly formed on one surface of the porous separator via electrostatic spinning, and the porous separator is selectively hot rolled and dried, and then a fiber layer is formed on the other side surface of the porous separator via electrostatic spinning, and then the porous separator is selectively hot rolled and dried.

In some embodiments, after the step S1 and prior to the step S2, the method further includes preparing the inorganic particle layer on the surface of the porous separator, and then in step S3, the fiber layer is prepared on a surface of the inorganic particle layer.

Specifically, the inorganic particle layer is prepared by steps of: coating a slurry comprising an inorganic particle layer, a coating solvent and an adhesive on the surface of the porous separator, and drying the slurry to obtain the inorganic particle layer on the surface of the porous separator.

In some embodiments, the inorganic particles include at least one selected from a group consisting of $Al_2O_3$ ($\alpha$-$Al_2O_3$, $\beta$-$Al_2O_3$, or $\gamma$-$Al_2O_3$), $SiO_2$, $BaSO_4$, $TiO_2$ (for example, rutile or anatase), CuO, MgO, $LiAlO_2$, $ZrO_2$, carbon nano tube (CNT), BN, SiC, $Si_3N_4$, WC, BC, AlN, $Fe_2O_3$, $BaTiO_3$, $MoS_2$, $\alpha$-$V_2O_5$, $PbTiO_3$, $TiB_2$, $CaSiO_3$, molecular sieve ZSM-5, clay and kaolin. In some embodiments, the inorganic particles include at least one selected from a group consisting of $Al_2O_3$, $SiO_2$ or $BaSO_4$. In some embodiments, the inorganic particle has a particle size of about 50 nanometers to about 3 microns.

It should be noted that the adhesive is configured to adhere the inorganic particles to the formed inorganic particle layer and provide a binding force between the porous separator and the inorganic particle layer. In some embodiments, the adhesive is at least one selected from a group consisting of PVDF, P(VDF-HFP), PMMA, PAN, PI, PVP, PEO, PVA, CMC and SBR. It should be noted that the coating solvent is used to ensure that the slurry thus obtained may have a certain fluidity facilitating to process, and the coating solvent is removed in subsequent processes, then the inorganic particle layer only contains the inorganic particles and the adhesive. In some embodiments, the coating solvent is at least one selected from a group consisting of N-methyl-pyrrolidone (NMP), N'N-dimethylformamide (DMF), N'N-dimethyl acetamide (DMAc), methylbenzene, dichloromethane, trichloromethane, deionized water and ethyl alcohol.

In some embodiments, a weight ratio of the inorganic particles, the coating solvent to the adhesive in the slurry is about 9-24:67-500:1

In embodiments of the present disclosure, the inorganic particle layer is formed on the surface of the porous separator, and the fiber layer obtained may be tightly adhered to the inorganic particle layer. Therefore, on one hand, peel strength of the composite film thus obtained may be effectively improved; on the other hand, the inorganic particle layer is disposed between the porous separator and the fiber layer, which may ensure an excellent thermal shrinkage resistance of the whole composite film.

In embodiments of the present disclosure, the thickness of the inorganic particle layer may be varied in a relatively large range. In some embodiments, the inorganic particle layer has a thickness of about 0.5 microns to about 3 microns.

As stated above, the fiber layer may be prepared on each of two sides of the porous separator, similarly, the inorganic particle layer may be first formed on each of two sides of the porous separator, and then the fiber layer is formed on each surface of the two inorganic particle layers.

In some embodiments, after the electrostatic spinning is performed, the film obtained may be selectively compacted under a pressure of about 1 MPa to about 15 MPa, for example, the film obtained is hot rolled (hot rolling condition: a temperature of about 25 Celsius degrees to about 60 Celsius degrees, a pressure of about 1 MPa to about 15 MPa), and then the film is dried with forced air at 50 Celsius degrees for 24 hours.

The present disclosure also provides a lithium battery, which includes a positive electrode, a negative electrode and a composite film mentioned above and disposed between the positive electrode and the negative electrode.

It should be noted that the method of preparing the lithium battery is similar to that of a common lithium battery, for example a positive electrode plate and a negative electrode plate are separated by the composite film in a drying room, and then a core is prepared via winding, an electrolyte is injected into the core and then the lithium battery is obtained after being sealed.

It should be noted that the positive electrode and the negative electrode are well known by those skilled in the art, detailed description thereof is therefore omitted herein.

The present disclosure will be further described hereinafter by referring to Examples.

Example 1

This Example is used to illustrate the composite film of the present disclosure and the preparation method thereof.

1. Preparation of spinning solution

Spinning polymer polyetherimide and spinning polymer polyether sulfone are added into two solvents (NMP) respectively and dissolved sufficiently by a water bath with magnetic stirring at 70 Celsius degrees, so as to form two spinning solutions with concentrations of 20 wt% and 15 wt% respectively.

2. Preparation of composite film

APE separator A1 having a thickness of 11 microns is wrapped on a roller (collecting device), the two spinning solutions are spun by an electrostatic spinning method with needle on one surface of the PE separator A1 at the same time. Parameters of electrostatic spinning includes: receiving distance is about 12 centimeters, temperature is 25 Celsius degrees, humidity is 50%, an inner diameter of the needle is 0.46 millimeter, a moving speed of the needle is 6.6 millimete/sec, a voltage is 10 kV, a flow velocity is 0.3 mL/h, a rotate speed of the roller is 2000 rpm. After the electrostatic spinning, the PE separator A1 is detached and mold pressed under a pressure of 15 MPa for 1 minute, followed by being dried with force air at 50 Celsius degrees for 24 hours to form a composite film S1, which has a fiber layer having a thickness of 3 microns form on one side surface thereof. A diameter of the fiber in a SEM image is measured via TEM Macrography software and recorded, and then an average fiber diameter calculated is 176 nanometers, and an areal density of the fiber layer calculated via gravimetric method is 1.22 $g/m^2$.

3. Porosity test

A mass of macromolecule on one unit area is calculated from a weight of the spinning solution, and a volume of macromolecule on one unit area is calculated from a known macromolecule density. Then a porosity of the composite film S1 is calculated according to a computational formula of:

$$Porosity = (1 - \text{volume of macromolecule} / (\text{area} \times \text{thickness})) \times 100\%$$

The porosity of the composite film S1 obtained is 79%.

4. Mechanical property test

Tensile strength and puncture strength of the composite film S1 are measured by a universal testing machine of Shenzhen Junrui Instrument & Equipment co., LTD.

Lateral tensile strength of the composite film S1 obtained is 121 MPa, longitudinal tensile strength of the composite film S1 obtained is 116 MPa, and the puncture strength of the composite film S1 obtained is 0.524 kgf.

5. Thermostability test

The composite film S1 is shaped into a 6 centimeters $\times$ 6 centimeters square piece and placed in an oven. The composite film S1 is baked at a temperature of 120 Celsius degrees, 140 Celsius degrees, 160 Celsius degrees, and 180 Celsius degrees for 1 hour respectively. Then a length and a width of the square piece is measured, and a hot-shrinkage rate of the composite film S1 is calculated according to a computational formula of:

$$\text{Hot-shrinkage rate} = (1 - \text{length}/6) \times 100\%$$

Lateral hot-shrinkage rates obtained at temperatures of 120 Celsius degrees, 140 Celsius degrees, 160 Celsius degrees, and 180 Celsius degrees are 1.00%, 3.50%, 2.20%, and 8.00% respectively, and longitudinal hot-shrinkage rates obtained at temperatures of 120 Celsius degrees, 140 Celsius degrees, 160 Celsius degrees, and 180 Celsius degrees are 0.80%, 1.30%, 2.50%, and 5.80% respectively.

Example 2

This Example is used to illustrate the composite film of the present disclosure and the preparation method thereof.

1. Preparation of spinning solution

Spinning polymer polyetherimide and spinning polymer polyacrylonitrile are added into two solvents (NMP) respectively and dissolved sufficiently by a water bath with magnetic stirring at 70 Celsius degrees, so as to form two spinning solutions with concentrations of 20 wt% and 10 wt% respectively.

2. Preparation of composite film

A PE separator A2 having a thickness of 11 microns is wrapped on a roller (collecting device), the two spinning solutions are spun by the electrostatic spinning method with needle on one surface of the PE separator A2 at the same time. Parameters of electrostatic spinning includes: receiving distance is about 12 centimeters, temperature is 25 Celsius degrees, humidity is 50%, an inner diameter of the needle is 0.46 millimeter, a moving speed of the needle is 6.6 millimete/sec, a voltage is 10 kV, a flow velocity is 1 mL/h, a rotate speed of the roller is 200 rpm. After the electrostatic spinning, the PE separator A2 is detached and mold pressed under a pressure of 5 MPa for 3 minutes, followed by being dried with force air dried at 50 Celsius degrees for 24 hours to form a composite film S2, which has a fiber layer having a thickness of 5 microns form on one side surface thereof. A diameter of the fiber in a SEM image is measured via TEM Macrography software and recorded, and then an average fiber diameter calculated is 176 nanometers, and an areal density of the fiber layer calculated via gravimetric method is 1.35 g/m$^2$.

Based on the same test method of Example 1, the porosity of the composite film S2 obtained is 82%, the lateral tensile strength of the composite film S2 obtained is 103 MPa, the longitudinal tensile strength of the composite film S2 obtained is 105 MPa, the puncture strength of the composite film S2 obtained is 0.544 kgf, the lateral hot-shrinkage rates obtained at temperatures of 120 Celsius degrees, 140 Celsius degrees, 160 Celsius degrees, and 180 Celsius degrees are 0.00%, 0.00%, 1.20%, and 3.50% respectively, and the longitudinal hot-shrinkage rates obtained at temperatures of 120 Celsius degrees, 140 Celsius degrees, 160 Celsius degrees, and 180 Celsius degrees are 0.80%, 1.00%, 2.20%, and 7.00% respectively.

Example 3

This Example is used to illustrate the composite film of the present disclosure and the preparation method thereof.

1. Preparation of spinning solution

Spinning polymer polyetherimide and spinning polymer polyacrylonitrile are added into two solvents (NMP) respectively and dissolved sufficiently by a water bath with magnetic stirring at 50 Celsius degrees, so as to form two spinning solutions with concentrations of 20 wt% and 13 wt% respectively.

2. Preparation of composite film

A PE separator A3 having a thickness of 11 microns is wrapped on a collecting device, an auxiliary electrode is disposed on a rear side of the collecting device, the auxiliary electrode includes multiple metal electrode plates that parallel to and fixed to each other, the metal electrode plate has a length of 500 millimeters and a width of 200 millimeters, a distance between two adjacent metal electrode plates is 200 millimeters, and a distance between the auxiliary electrode and the collecting device is 500 millimeters. The two spinning solutions are spun via electrostatic spinning without needle method on one surface of the PE separator A3 at the same time. Parameters of electrostatic spinning includes: receiving distance is about 18.2 centimeters, temperature is 25 Celsius degrees, humidity is 35%, a moving speed of liquid bath is 540 millimeter/sec, a moving speed of substrate is 150 millimeter/sec, a voltage of the source end for generating fiber is 40 kV, a voltage of the collecting device is -20 kV, a voltage difference between the source end and the collecting device is 60 kV. Then the separator A3 is rotated for 90 degrees and electrostatic spun by using the same electrostatic spinning method. After the electrostatic spinning, the PE separator A3 is detached and mold pressed under a pressure of 5 MPa for 3 minutes, followed by being dried with force air at 50 Celsius degrees for 24 hours to form a composite film S3, which has a fiber layer having a thickness of 3 microns form on one side surface thereof, and fiber in the fiber layer is distributed in a orthogonality manner. A diameter of the fiber in a SEM image is measured via TEM Macrography software and recorded, and then an average fiber diameter calculated is 510 nanometers, and an areal density of the fiber layer calculated via gravimetric method is 1.12 g/m$^2$.

Based on the same test method of Example 1, the porosity of the composite film S3 obtained is 78.9%, the lateral tensile strength of the composite film S3 obtained is 141 MPa, the longitudinal tensile strength of the composite film S3 obtained is 137 MPa, the puncture strength of the composite film S3 obtained is 0.543 kgf, the lateral hot-shrinkage rates obtained at temperatures of 120 Celsius degrees, 140 Celsius degrees, 160 Celsius degrees, and 180 Celsius degrees are 1.00%, 1.50%, 3.50%, and 6.50% respectively, and the longitudinal hot-shrinkage rates obtained at temperatures of 120 Celsius degrees, 140 Celsius degrees, 160 Celsius degrees, and 180 Celsius degrees are 0.90%, 2.30%, 3.00%, and 7.50% respectively.

Example 4

This Example is used to illustrate the composite film of the present disclosure and the preparation method thereof.

1. Preparation of spinning solution

Spinning polymer polyetherimide and spinning polymer polyacrylonitrile are added into two solvents (NMP) respectively and dissolved sufficiently by a water bath with magnetic stirring at 50 Celsius degrees, so as to form two spinning solutions with concentrations of 15 wt% and 15 wt% respectively.

2. Preparation of composite film

A PE separator A4 having a thickness of 11 microns is wrapped on a roller (collecting device), two charged planes are disposed on two sides of spinning area, a voltage difference between the two charged planes is 10kV. The two spinning solutions are spun by the electrostatic spinning method with needle on one surface of the PE separator A4 at the same time. Parameters of electrostatic spinning includes: a receiving distance is about 12 centimeters, a temperature is 40 Celsius degrees, humidity is 30%, an inner diameter of the needle is 0.46 millimeter, a moving speed of the needle is 6.6 millimete/sec, a voltage is 10 kV, a flow velocity is 0.3 mL/h, a rotate speed of the roller is 200 rpm. Then the separator A4 is detached and rotated for 90 degrees, and fixed to the roller again, followed by being electrostatic spun by using the same electrostatic spinning method. After the electrostatic spinning, the PE separator A4 is detached and mold pressed under a pressure of 5 MPa for 3 minutes, followed by being dried with force air at 50 Celsius degrees for 24 hours to form a composite film S4, which has a fiber layer having a thickness of 5 microns form on one side surface thereof, and the fiber in the fiber layer is distributed in an orthogonality manner. A diameter of the fiber in a SEM image is measured via TEM Macrography software and recorded, and then an average fiber diameter calculated is 543 nanometers, and an areal density of the fiber layer calculated via gravimetric method is 1.25 $g/m^2$.

Based on the same test method of Example 1, the porosity of the composite film S4 obtained is 85.1%, the lateral tensile strength of the composite film S4 obtained is 132 MPa, the longitudinal tensile strength of the composite film S4 obtained is 134 MPa, the puncture strength of the composite film S4 obtained is 0.564 kgf, the lateral hot-shrinkage rates obtained at temperatures of 120 Celsius degrees, 140 Celsius degrees, 160 Celsius degrees, and 180 Celsius degrees are 0.00%, 1.50%, 2.60%, and 7.50% respectively, and the longitudinal hot-shrinkage rates obtained at temperatures of 120 Celsius degrees, 140 Celsius degrees, 160 Celsius degrees, and 180 Celsius degrees are 0.00%, 1.00%, 3.20%, and 7.60% respectively.

Example 5

This Example is used to illustrate the composite film of the present disclosure and the preparation method thereof.

1. Preparation of spinning solution

Spinning polymer polyetherimide is added into solvent NMP and dissolved sufficiently by a water bath with magnetic stirring at 50 Celsius degrees, so as to form a spinning solution with a concentration of 20 wt%.

2. Preparation of composite film

A PE separator A5 having a thickness of 11 microns is wrapped on a roller (collecting device), an auxiliary electrode is disposed on an end of the roller that far away from the needle, the auxiliary electrode includes multiple metal electrode plates that parallel to and fixed to each other, the metal electrode plate has a length of 1000 millimeters and a width of 500 millimeters, a distance between two adjacent metal electrode plates is 500 millimeters, and a distance between the auxiliary electrode and the collecting device is 1000 millimeters. The spinning solution is spun by the electrostatic spinning method with needle on one surface of the PE separator A5. Parameters of electrostatic spinning includes: a receiving distance is about 12 centimeters, a temperature is 40 Celsius degrees, a humidity is 50%, an inner diameter of the needle is 0.46 millimeter, a moving speed of the needle is 6.6 millimete/sec, a voltage is 10 kV, a flow velocity is 1 mL/h, a rotate speed of the roller is 2000 rpm. Then the separator A5 is detached and rotated for 90 degrees, and then fixed to the roller again, followed by being electrostatic spun by using the same electrostatic spinning method. After the electrostatic spinning, the PE separator A5 is detached and mold pressed under a pressure of 5 MPa for 3 minutes, followed by being dried with force air at 50 Celsius degrees for 24 hours to form a composite film S5, which has a fiber layer having a thickness of 5 microns form on one side surface thereof, and the fiber in the fiber layer is distributed in an orthogonality manner. A diameter of the fiber in a SEM image is measured via TEM Macrography software and recorded, and then an average fiber diameter calculated is 639 nanometers, and an areal density of the fiber layer calculated via gravimetric method is 1.05 $g/m^2$.

Based on the same test method of Example 1, the porosity of the composite film S5 obtained is 83.2%, the lateral tensile strength of the composite film S5 obtained is 133 MPa, the longitudinal tensile strength of the composite film S5 obtained is 137 MPa, the puncture strength of the composite film S5 obtained is 0.529 kgf, the lateral hot-shrinkage rates obtained at temperatures of 120 Celsius degrees, 140 Celsius degrees, 160 Celsius degrees, and 180 Celsius degrees are 0.00%, 1.50%, 2.00%, and 8.60% respectively, and the longitudinal hot-shrinkage rates obtained at temperatures of 120 Celsius degrees, 140 Celsius degrees, 160 Celsius degrees, and 180 Celsius degrees are 0.70%, 1.00%, 2.50%, and 8.30% respectively.

Example 6

This Example is used to illustrate the composite film of the present disclosure and the preparation method thereof.

1. Preparation of separator having multiple layers

$Al_2O_3$ particles having an average particle size of 615 nanometers, adhesive (PEO) and coating solvent (deionized water) are mixed according to a weight ratio of 24:1:500 to form a slurry. Then an $Al_2O_3$ particle layer is coated on a surface of a PE separator having a thickness of 11 microns by a coating method, and dried to form a double layer separator A6 having a thickness of 13 microns, in which the PE separator has a thickness of 11 microns, the $Al_2O_3$ particle layer coated on the surface of the PE separator has a thickness of 2 microns.

2. Preparation of spinning solution

Spinning polymer polyetherimide and spinning polymer polyacrylonitrile are added into two solvents (NMP) respectively and dissolved sufficiently by a water bath with magnetic stirring at 50 Celsius degrees, so as to form two spinning solutions with concentrations of 20wt% and 10wt% respectively.

3. Preparation of composite film

The double layer separator A6 having a thickness of 13 microns is wrapped on a roller (collecting device), the two spinning solutions are spun by the electrostatic spinning method with needle on one surface of the inorganic particle layer of the double layer separator A6 at the same time. Parameters of electrostatic spinning includes: a receiving distance is about 12 centimeters, a temperature is 70 Celsius degrees, a humidity is 40%, an inner diameter of the needle is 0.46 millimeter, a moving speed of the needle is 6.6 millimete/sec, a voltage is 10 kV, a flow velocity is 0.6 mL/h, a rotate speed of the roller is 200 rpm. Then the double layer separator A6 is detached and rotated for 90 degrees, and then fixed on the roller again, followed by electrostatic spun by using the same electrostatic spinning method. After the electrostatic spinning, the double layer separator A6 is detached and mold pressed under a pressure of 5 MPa for 3 minutes, followed by being dried with force air at 50 Celsius degrees for 24 hours to form a composite film S6, which has a fiber layer having a thickness of 3 microns form on one side surface thereof, and fibers in the fiber layer are distributed in an orthogonality manner. A diameter of the fiber in a SEM image is measured via TEM Macrography software and recorded, and then an average fiber diameter calculated is 1042 nanometers, and an areal density of the fiber layer calculated via gravimetric method is 1.11 $g/m^2$.

Based on the same test method of Example 1, the porosity of the composite film S6 obtained is 79.5%, the lateral tensile strength of the composite film S6 obtained is 130 MPa, the longitudinal tensile strength of the composite film S6 obtained is 129 MPa, the puncture strength of the composite film S6 obtained is 0.558 kgf, the lateral hot-shrinkage rates obtained at temperatures of 120 Celsius degrees, 140 Celsius degrees, 160 Celsius degrees, and 180 Celsius degrees are 0.00%, 0.60%, 1.20%, and 2.00% respectively, and a longitudinal hot-shrinkage rates obtained at temperature of 120 Celsius degrees, 140 Celsius degrees, 160 Celsius degrees, and 180 Celsius degrees are 0.00%, 0.00%, 1.60%, and 1.50% respectively.

Example 7

This Example is used to illustrate the composite film of the present disclosure and the preparation method thereof.

1. Preparation of separator having multiple layers

$SiO_2$ particles having an average particle size of 1 micron, adhesive (PVDF) and coating solvent (NMP) are mixed according to a weight ratio of 19:1:200 to form a slurry. Then an $SiO_2$ particle layer is coated on a surface of a PE separator having a thickness of 11 microns by a coating method, and dried to form a double layer separator A7 having a thickness of 13 microns, in which the PE separator has a thickness of 11 microns, the $SiO_2$ particle layer coated on the surface of the PE separator has a thickness of 2 microns.

2. Preparation of spinning solution

Spinning polymer polyetherimide and spinning polymer polyacrylonitrile are added into two solvents (NMP) respectively and dissolved sufficiently by a water bath with magnetic stirring at 50 Celsius degrees, so as to form two spinning solutions with concentrations of 20 wt% and 12 wt% respectively.

3. Preparation of composite film

The double layer separator A7 having a thickness of 13 microns is wrapped on a roller (collecting device), the two spinning solutions are spun by the electrostatic spinning method with needle on one surface of the inorganic particle layer of the double layer separator A7 at the same time. Parameters of electrostatic spinning includes: a receiving distance is about 12 centimeters, a temperature is 70 Celsius degrees, humidity is 30%, an inner diameter of the needle is 0.46 millimeter, a moving speed of the needle is 6.6 millimete/sec, a voltage is 10 kV, a flow velocity is 0.6 mL/h, a rotate speed of the roller is 5000 rpm. Then the double layer separator A7 is detached and rotated for 90 degrees, and then fixed on the roller again, followed by electrostatic spun by using the same electrostatic spinning method. After the electrostatic spinning, the double layer separator A7 is detached and mold pressed under a pressure of 5 MPa for 3 minutes, followed by being dried with force air at 50 Celsius degrees for 24 hours to form a composite film S7, which has a fiber layer having a thickness of 5 microns form on one side surface thereof, and fibers in the fiber layer are distributed in an orthogonality manner. A diameter of the fiber in a SEM image is measured via TEM Macrography software and recorded, and then an average fiber diameter calculated is 1059 nanometers, and an areal density of the fiber layer calculated via gravimetric method is 1.24 $g/m^2$.

Based on the same test method of Example 1, the porosity of the composite film S7 obtained is 83.5%, the lateral tensile strength of the composite film S7 obtained is 120 MPa, the longitudinal tensile strength of the composite film S7 obtained is 119 MPa, the puncture strength of the composite film S7 obtained is 0.577 kgf, the lateral hot-shrinkage rates obtained at temperatures of 120 Celsius degrees, 140 Celsius degrees, 160 Celsius degrees, and 180 Celsius degrees are 0.50%, 0.40%, 0.60%, and 1.80% respectively, and the longitudinal hot-shrinkage rates obtained at temperatures of 120 Celsius degrees, 140 Celsius degrees, 160 Celsius degrees, and 180 Celsius degrees are 0.70%, 1.00%, 0.50%, and 1.50% respectively.

Example 8

This Example is used to illustrate the composite film of the present disclosure and the preparation method thereof.

1. Preparation of separator having multiple layers

$BaSO_4$ particles having an average particle size of 500 nanometers, adhesive (PEO) and coating solvent (deionized water) are mixed according to a weight ratio of 10:1:200 to form a slurry. Then an $BaSO_4$ particle layer is coated on a surface of a PE separator having a thickness of 11 microns by a coating method, and dried to form a double layer separator A8 having a thickness of 12 microns, in which the PE separator has a thickness of 11 microns, the $BaSO_4$ particle layer coated on the surface of the PE separator has a thickness of 1 microns.

2. Preparation of spinning solution

Spinning polymer polyetherimide is added into solvent NMP and dissolved sufficiently by a water bath with magnetic stirring at 50 Celsius degrees, so as to form a spinning solution with a concentration of 20wt%.

3. Preparation of composite film

The double layer separator A8 having a thickness of 12 microns is wrapped on a roller (collecting device), the spinning solution is spun by the electrostatic spinning method with needle on one surface of the inorganic particle layer of the double layer separator A8. Parameters of electrostatic spinning includes: a receiving distance is about 12 centimeters, a temperature is 25 Celsius degrees, humidity is 50%, an inner diameter of the needle is 0.46 millimeter, a moving speed of the needle is 6.6 millimete/sec, a voltage is 10 kV, a flow velocity is 0.3 mL/h, a rotate speed of the roller is 2000 rpm. After the electrostatic spinning, the double layer separator A8 is detached and mold pressed under a pressure of 3 MPa for 5 minutes, followed by being dried with force air at 50 Celsius degrees for 24 hours to form a composite film S8, which has a fiber layer having a thickness of 5 microns form on one surface of the inorganic particle surface thereof, and fibers in the fiber layer are distributed in an orthogonality manner. A diameter of the fiber in a SEM image is measured via TEM Macrography software and recorded, and then an average fiber diameter calculated is 1158 nanometers, and an areal density of the fiber layer calculated via gravimetric method is 1.02 $g/m^2$.

Based on the same test method of Example 1, the porosity of the composite film S8 obtained is 84.3%, the lateral tensile strength of the composite film S8 obtained is 119 MPa, the longitudinal tensile strength of the composite film S8 obtained is 124 MPa, the puncture strength of the composite film S8 obtained is 0.576 kgf, the lateral hot-shrinkage rates obtained at temperatures of 120 Celsius degrees, 140 Celsius degrees, 160 Celsius degrees, and 180 Celsius degrees are 0.00%, 0.30%, 0.50%, and 1.00% respectively, and the longitudinal hot-shrinkage rates obtained at temperatures of 120 Celsius degrees, 140 Celsius degrees, 160 Celsius degrees, and 180 Celsius degrees are 0.00%, 0.50%, 0.80%, and 1.50% respectively.

Comparative Example 1

This Comparative Example is used to comparatively illustrate composite film of the present disclosure and the preparation method thereof.

Based on the same test method of Example 1, lateral tensile strength of the PE separator A1 of Example 1 is 150 MPa, the longitudinal tensile strength of the PE separator A1 of Example 1 is 152 MPa, the puncture strength of the PE separator A1 of Example 1 is 0.501 kgf, the lateral hot-shrinkage rate obtained at a temperature of 120 Celsius degrees and the longitudinal hot-shrinkage rate obtained at a temperature of 120 Celsius degrees are 70.0% and 75.2% respectively. At a temperature higher than 140 Celsius degrees, the PE separator A1 of Example 1 is melt, it has a shrinkage rate higher that 95%.

Comparatively Example 2

This Comparative Example is used to comparatively illustrate composite film of the present disclosure and the preparation method thereof.

The preparation process of the composite film of this Comparative Example is the same as that of Example 4, except for that: the spinning polymer is polyacrylonitrile, the composite film obtained is marked as D2.

Based on the same test method of Example 1, the porosity of the composite film D2 obtained is 83.0%, the lateral tensile strength of the composite film D2 obtained is 130 MPa, the longitudinal tensile strength of the composite film D2 obtained is 129 MPa, the puncture strength of the composite film D2 obtained is 0.501 kgf, the lateral hot-shrinkage rates obtained at temperatures of 120 Celsius degrees, 140 Celsius degrees, 160 Celsius degrees, and 180 Celsius degrees are 0.80%, 1.00%, 6.50%, and 86.0% respectively, and the longitudinal hot-shrinkage rates obtained at temperatures of 120 Celsius degrees, 140 Celsius degrees, 160 Celsius degrees, and 180 Celsius degrees are 0.70%, 1.50%, 3.50%, and 82.2% respectively.

As can be seen from test results of these Examples and Comparative Examples, the composite film of the present disclosure has an excellent thermostability, especially at a high temperature, and the composite film of the present disclosure has a very low hot-shrinkage rate.

In addition, the fibers in the fiber layer of the composite film of the present disclosure are distributed in a certain orientation, thus mechanical strength of the composite film of the present disclosure may be effectively improved.

**Claims**

1. A composite film, comprising a porous separator, and a fiber layer disposed on a surface of the porous separator and containing polyetherimide, wherein the fiber layer includes at least one group of fiber bundle, the fiber bundle includes multiple fibers parallel to each other.

2. The composite film of claim 1, wherein one or more of the following features are fulfilled:

   - the fiber layer is made of polyetherimide, or
   - the fiber layer is made of polyetherimide and an auxiliary polymer,
   - the fiber layer contains 15 wt% to 100 wt% of polyetherimide and 0 wt% to 85 wt% of the auxiliary polymer,
   - the fiber layer contains 50 wt% to 80 wt% of polyetherimide and 20 wt% to 50 wt% of the auxiliary polymer,

   preferably wherein the auxiliary polymer is at least one selected from a group consisting of polyacrylonitrile, copoly(ether ether ketone), polyether sulfone, polyamide-imide, polyamide acid, and polyvinylpyrrolidone,

   - a fiber in the fiber layer has a diameter of 100 nanometers to 2000 nanometers,
   - the fiber layer has a thickness of 0.5 microns to 30 microns,
   - the fiber layer has a porosity of 75% to 93%,
   - the fiber layer has an areal density of 0.2 $g/m^2$ to 15 $g/m^2$.

3. The composite film of claim 2, wherein the fiber layer includes multiple groups of fiber bundles, the multiple groups of fiber bundles intersect with each other, or
   wherein the fiber layer is disposed on each of two surfaces of the porous separator.

4. The composite film of any one of claims 1-3, wherein the porous separator is a polyolefin separator.

5. The composite film of any one of claims 1-4, further comprising an inorganic particle layer disposed between the fiber layer and the porous separator,
   preferably wherein the inorganic particle layer includes inorganic particles and an adhesive,
   preferably wherein the inorganic particles comprise at least one selected from a group consisting of $Al_2O_3$, $SiO_2$, $BaSO_4$, $TiO_2$, $CuO$, $MgO$, $LiAlO_2$, $ZrO_2$, carbon nanotube, BN, SiC, $Si_3N_4$, WC, BC, AlN, $Fe_2O_3$, $BaTiO_3$, $MoS_2$, $\alpha$-$V_2O_5$, $PbTiO_3$, $TiB_2$, $CaSiO_3$, molecular sieve, clay and kaolin, or
   wherein the adhesive is at least one selected from a group consisting of polyvinylidene fluoride, poly(vinylidene fluoride-hexafluoropropylene), polymethyl methacrylate, polyacrylonitrile, polyimide, polyvinylpyrrolidone, polyoxyethylene, polyvinyl alcohol, carboxymethylcellulose and styrene butadiene rubber.

6. The composite film of claim 5, wherein the inorganic particle has a particle size of 50 nanometers to 3 microns, or wherein the inorganic particle layer has a thickness of 0.5 microns to 3 microns, or wherein the inorganic particle layer is disposed on each of two surfaces of the porous separator.

7. A method of preparing a composite film of any one of claims 1-6, comprising steps of:

   S1) providing a porous separator;
   S2) providing a spinning solution including a solvent, and a spinning polymer dissolved in the solvent and including polyetherimide; and
   S3) preparing a fiber layer on the porous separator by using the spinning solution, and drying the fiber layer to obtain the composite film comprising the porous separator and the fiber layer disposed on the porous separator.

8. The method of claim 7, wherein step S1 further comprises providing an inorganic particle layer disposed on a surface of the porous separator, or
   wherein step S1 comprises: providing the porous separator, and then preparing the inorganic particle layer on the surface of the porous separator; and
   step S3 comprises: preparing the fiber layer on a surface of the inorganic particle layer, or
   wherein the inorganic particle layer is prepared by steps of: coating a slurry comprising inorganic particles, a coating solvent and an adhesive on the surface of the porous separator, and drying the slurry to obtain the inorganic particle layer on the surface of the porous separator, or
   wherein the inorganic particle layer is prepared on each of two surfaces of the porous separator, and the fiber layer is prepared on each of the inorganic particle layers prepared on two surfaces of the porous separator.

9. The method of claim 7 or 8, wherein the spinning polymer has a concentration of 3wt% to 30wt% in the spinning solution.

10. The method of any one of claims 7-9, wherein step S2 further comprises providing an auxiliary spinning solution including an auxiliary polymer, and
    step S3 comprises preparing a fiber layer on the porous separator by using the spinning solution and the auxiliary spinning solution,
    preferably wherein the auxiliary polymer is at least one selected from a group consisting of polyacrylonitrile, copoly(ether ether ketone), polyether sulfone, polyamide-imide, polyamide acid, and polyvinylpyrrolidone,
    preferably wherein a weight ratio of the polyetherimide to the auxiliary polymer is (50-80):(20-50) in step S3.

11. The method of any one of claims 7-10, wherein in step S3, the fiber layer is prepared by a high speed electrostatic spinning method or an auxiliary electric field electrostatic spinning method,
    preferably wherein the high speed electrostatic spinning method comprises: electrostatic spinning under a condition that a collecting device configured for collecting fiber has a rotation speed of 1000 rpm to 6000 rpm, or
    wherein the auxiliary electric field electrostatic spinning method comprises:

    setting an auxiliary electrode on an end, far away from a source end for generating fiber, of a collecting device configured for collecting fiber, the collecting device having a voltage of -60 kV to 0 kV, the auxiliary electrode having a voltage lower than or equal to -60 kV, and a voltage difference existing between the auxiliary electrode and the collecting device; and electrostatic spinning;
    or taking an area between a source end for generating fiber and a collecting device as a spinning area, the spinning area being disposed between two charged planes that parallel to each other, the two charged planes being disposed in a direction from the source end to the collecting device, a voltage difference between the two charged planes being lower than or equal to 60 kV; and then electrostatic spinning.

12. The method of claim 11, wherein the step S3 comprises steps of: forming a fiber bundle on the porous separator via the high speed electrostatic spinning method or the auxiliary electric field electrostatic spinning method, rotating the porous separator, continuously performing the high speed electrostatic spinning method or the auxiliary electric field electrostatic spinning method; and repeating above steps at least once to prepare the fiber layer on the porous separator, wherein the fiber layer includes multiple groups of fiber bundles, the multiple groups of fiber bundles have different extending directions, or
    wherein the high speed electrostatic spinning method is carried out under a rotation speed of 1000 rpm to 2000 rpm.

**13.** The method of claim 11, wherein the auxiliary electrode comprises multiple metal electrode plates parallel to and fixed to each other, the metal electrode plate has a length of 10 millimeters to 1000 millimeters and a width of 1 millimeter to 500 millimeters, a distance between two adjacent metal electrode plates is 1 millimeter to 500 millimeters, and a distance between the auxiliary electrode and the collecting device is 1 millimeter to 1000 millimeters.

**14.** The method of any one of claims 7-13, further comprising: pressing the composite film under a pressure of 1 MPa to 15 MPa after the fiber layer is prepared.

**15.** A lithium battery, comprising a positive electrode, a negative electrode and a composite film of any one of claims 1-6 disposed between the positive electrode and the negative electrode.


**Patentansprüche**

**1.** Verbundfilm, enthaltend einen porösen Separator und eine Faserschicht, die auf einer Oberfläche des porösen Separators angeordnet ist und Polyetherimid enthält, worin die Faserschicht zumindest eine Gruppe von Faserbündeln enthält, wobei das Faserbündel multiple Fasern enthält, die parallel zueinander angeordnet sind.

**2.** Verbundfilm gemäß Anspruch 1, worin eines oder mehrere der folgenden Merkmale erfüllt sind:

- die Faserschicht ist aus Polyetherimid erzeugt oder
- die Faserschicht ist aus Polyetherimid und einem Hilfspolymer erzeugt,
- die Faserschicht enthält 15 bis 100 Gew.-% des Polyetherimides und 0 bis 85 Gew.-% des Hilfspolymers,
- die Faserschicht enthält 50 bis 80 Gew.-% des Polyetherimides und 20 bis 50 Gew.-% des Hilfspolymers, bevorzugt ist das Hilfspolymer zumindest eines, ausgewählt aus einer Gruppe, bestehend aus Polyacrylnitril, Copoly(etheretherketon), Polyethersulfon, Polyamidimid, Polyamidsäure und Polyvinylpyrrolidon,
- eine Faser in der Faserschicht hat einen Durchmesser von 100 bis 2.000 nm,
- die Faserschicht hat eine Dicke von 0,5 bis 30 Mikron,
- die Faserschicht hat eine Porosität von 75 bis 93 %,
- die Faserschicht hat eine Flächendichte von 0,2 bis 15 g/m$^2$.

**3.** Verbundfilm gemäß Anspruch 2, worin die Faserschicht multiple Gruppen von Faserbündeln enthält, wobei die multiplen Gruppen von Faserbündeln sich schneiden oder worin die Faserschicht auf jeder von zwei Oberflächen des porösen Separators angeordnet ist.

**4.** Verbundfilm gemäß einem der Ansprüche 1 bis 3, worin der poröse Separator ein Polyolefinsparator ist.

**5.** Verbundfilm gemäß einem der Ansprüche 1 bis 4, weiterhin enthaltend eine anorganische Teilchenschicht, die zwischen der Faserschicht und dem porösen Separator angeordnet ist,
bevorzugt worin die anorganische Teilchenschicht anorganische Teilchen und ein Adhäsiv enthält,
bevorzugt worin die anorganischen Teilchen zumindest eines enthalten, ausgewählt aus einer Gruppe, bestehend aus $Al_2O_3$, $SiO_2$, $BaSO_4$, $TiO_2$, $CuO$, $MgO$, $LiAlO_2$, $ZrO_2$, Kohlenstoff-Nanorohr, $BN$, $SiC$, $Si_3N_4$, $WC$, $BC$, $AlN$, $Fe_2O_3$, $BaTiO_3$, $MoS_2$, $\alpha$-$V_2O_5$, $PbTiO_3$, $TiB_2$, $CaSiO_3$, Molekularsieb, Lehm und Kaolin oder
worin das Adhäsiv zumindest eines ist, ausgewählt aus einer Gruppe, bestehend aus Polyvinylidenfluorid, Poly(vinylidenfluorid-Hexafluorpropylen), Polymethylmethacrylat, Polyacrylnitril, Polyimid, Polyvinylpyrrolidon, Polyoxyethylen, Polyvinylalkohol, Carboxymethylcellulose und Styrol-Butadien-Kautschuk.

**6.** Verbundfilm gemäß Anspruch 5, worin das anorganische Teilchen eine Teilchengröße von 50 nm bis 3 $\mu$m hat, oder worin die anorganische Teilchenschicht eine Dicke von 0,5 bis 3 Mikron hat oder
worin die anorganische Teilchenschicht auf jeder von zwei Oberflächen des porösen Separators angeordnet ist.

**7.** Verfahren zur Herstellung eines Verbundfilmes gemäß einem der Ansprüche 1 bis 6, enthaltend die Schritte:

S1) Vorsehen eines porösen Separators,
S2) Vorsehen einer Spinnlösung, die ein Lösungsmittel und ein Spinnpolymer enthält, das im Lösungsmittel enthalten ist und Polyetherimid enthält, und
S3) Herstellen einer Faserschicht auf dem porösen Separator durch Verwenden der Spinnlösung und Trocknen der Faserschicht, unter Erhalt des Verbundfilmes, enthaltend den porösen Separator und die Faserschicht, die auf dem porösen Separator angeordnet ist.

8. Verfahren gemäß Anspruch 7, worin Schritt S1 weiterhin das Vorsehen einer anorganischen Teilchenschicht enthält, die auf einer Oberfläche des porösen Separators angeordnet ist, oder

worin der Schritt S1 enthält: Vorsehen des porösen Separators und anschließendes Herstellen der anorganischen Teilchenschicht auf der Oberfläche des porösen Separators und

Schritt S3 enthält: Herstellen der Faserschicht auf einer Oberfläche der anorganischen Teilchenschicht oder

worin die anorganische Teilchenschicht hergestellt wird durch die Schritte: Beschichten einer Aufschlämmung, die anorganische Teilchen, ein Beschichtungslösungsmittel und ein Adhäsiv enthält, auf die Oberfläche des porösen Separators und Trocknen der Aufschlämmung für den Erhalt der anorganischen Teilchenschicht auf der Oberfläche des porösen Separators, oder

worin die anorganische Teilchenschicht auf jeder von zwei Oberflächen des porösen Separators hergestellt ist und die Faserschicht auf jeder der anorganischen Teilchenschichten hergestellt ist, hergestellt auf zwei Oberflächen des porösen Separators.

9. Verfahren gemäß Anspruch 7 oder 8, worin das Spinnpolymer eine Konzentration von 3 bis 30 Gew.-% in der Spinnlösung hat.

10. Verfahren gemäß einem der Ansprüche 7 bis 9, worin Schritt S2 weiterhin das Vorsehen einer Hilfsspinnlösung mit einem Hilfspolymer enthält und

Schritt S3 die Herstellung einer Faserschicht auf dem porösen Separator durch Verwendung der Spinnlösung und der Hilfsspinnlösung enthält,

bevorzugt worin das Hilfspolymer zumindest eines ist, ausgewählt aus einer Gruppe, bestehend aus Polyacrylnitril, Copoly(etheretherketon), Polyethersulfon, Polyamidimid, Polyamidsäure und Polyvinylpyrrolidon,

bevorzugt worin ein Gewichtsverhältnis des Polyetherimides zum Hilfspolymer (50-80): (20-50) im Schritt S3 ist.

11. Verfahren gemäß einem der Ansprüche 7 bis 10, worin im Schritt S3 die Faserschicht hergestellt wird durch ein elektrostatisches Hochgeschwindigkeits-Spinnverfahren oder ein elektrisches Feld-elektrostatisches Hilfs-Spinnverfahren hergestellt wird,

bevorzugt worin das elektrostatische Hochgeschwindigkeits-Spinnverfahren enthält: elektrostatisches Spinnen unter einer Bedingung, dass eine Sammelvorrichtung, die zum Sammeln von Fasern konfiguriert ist, eine Rotationsgeschwindigkeit von 1.000 bis 6.000 UPM hat oder

worin das elektrische Feld elektrostatische Hilfs-Spinnverfahren enthält:

Einstellen einer Hilfselektrode an einem Ende einer Sammelvorrichtung, die zum Sammeln der Faser konfiguriert ist, weit entfernt von einem Quellenende zur Erzeugung einer Faser, wobei die Sammelvorrichtung eine Spannung von -60 bis 0 kV hat, die Hilfselektrode eine Spannung von weniger als oder gleich -60 kV hat und ein Spannungsunterschied zwischen der Hilfselektrode und der Sammelvorrichtung existiert und elektrostatisches Spinnen,

oder Verwenden einer Fläche zwischen einem Quellenende zur Erzeugung einer Faser und einer Sammelvorrichtung als Spinnfläche, worin die Spinnfläche zwischen zwei geladenen Ebenen angeordnet ist, die parallel zueinander sind, wobei die geladenen Ebenen in einer Richtung von dem Quellenende zu der Sammelvorrichtung angeordnet sind, ein Spannungsunterschied zwischen den zwei geladenen Ebenen niedriger als oder gleich 60 kV ist, und anschließendes elektrostatisches Spinnen.

12. Verfahren gemäß Anspruch 11, worin der Schritt S3 die Schritte enthält: Bilden eines Faserbündels auf dem porösen Separator über das elektrostatische Hochgeschwindigkeits-Spinnverfahren oder das elektrische Feld-elektrostatische Hilfs-Spinnverfahren, Rotieren des porösen Separators, kontinuierliches Durchführen des elektrostatischen Hochgeschwindigkeits-Spinnverfahrens oder des elektrischen Feld-elektrostatischen Hilfs-Spinnverfahrens, und zumindest einmaliges Wiederholen der obigen Schritte, zur Herstellung der Faserschicht auf dem porösen Separator, worin die Faserschicht multiple Gruppen von Faserbündeln enthält, wobei die multiplen Gruppen von Faserbündeln unterschiedliche Erstreckungsrichtungen haben, oder

worin das elektrostatische Hochgeschwindigkeits-Spinnverfahren unter einer Rotationsgeschwindigkeit von 1.000 bis 2.000 UPM durchgeführt wird.

13. Verfahren gemäß Anspruch 11, worin die Hilfselektrode multiple Metallelektrodenplatten enthält, die parallel zueinander und miteinander fixiert sind, wobei die Metallelektrodenplatte eine Länge von 10 bis 1.000 mm und eine Breite von 1 bis 500 mm hat, ein Abstand zwischen zwei benachbarten Metallelektrodenplatten 1 bis 500 mm ist und ein Abstand zwischen der Hilfselektrode und der Sammelvorrichtung 1 bis 1.000 mm ist.

**14.** Verfahren gemäß einem der Ansprüche 7 bis 13, weiterhin enthaltend: Pressen des Verbundfilmes unter einem Druck von 1 bis 15 MPa nach Herstellung der Faserschicht.

**15.** Lithiumbatterie, enthaltend eine positive Elektrode, eine negative Elektrode und einen Verbundfilm gemäß einem der Ansprüche 1 bis 6, der zwischen der positiven Elektrode und der negativen Elektrode angeordnet ist.

**Revendications**

**1.** Film composite, comprenant un séparateur poreux et une couche de fibres disposée sur une surface du séparateur poreux et contenant du polyétherimide, dans lequel la couche de fibres inclut au moins un groupe de faisceau de fibres, le faisceau de fibres inclut de multiples fibres parallèles les unes aux autres.

**2.** Film composite selon la revendication 1, dans lequel une ou plusieurs des caractéristiques suivantes sont satisfaites :

- la couche de fibres est constituée de polyétherimide ; ou
- la couche de fibres est constituée de polyétherimide et d'un polymère auxiliaire,
- la couche de fibres contient 15 % en poids à 100% en poids de polyétherimide et 0 % en poids à 85 % en poids du polymère auxiliaire,
- la couche de fibres contient 50 % en poids à 80 % en poids de polyétherimide et 20 % en poids à 50 % en poids du polymère auxiliaire,

de préférence dans lequel le polymère auxiliaire est au moins un choisi dans un groupe consistant en polyacrylonitrile, copoly(éther éther cétone), polyéther sulfone, polyamide-imide, acide polyamide et polyvinylpyrrolidone,

- une fibre dans la couche de fibres présente un diamètre de 100 nanomètres à 2000 nanomètres,
- la couche de fibres présente une épaisseur de 0,5 micron à 30 microns,
- la couche de fibres présente une porosité de 75 % à 93 %,
- la couche de fibres présente une densité surfacique de 0,2 g/m$^2$ à 15 g/m$^2$.

**3.** Film composite selon la revendication 2, dans lequel la couche de fibres inclut de multiples groupes de faisceaux de fibres, les multiples groupes de faisceaux de fibres se croisent les uns les autres, ou dans lequel la couche de fibres est disposée sur chacune de deux surfaces du séparateur poreux.

**4.** Film composite selon l'une quelconque des revendications 1 à 3, dans lequel le séparateur poreux est un séparateur en polyoléfine.

**5.** Film composite selon l'une quelconque des revendications 1 à 4, comprenant en outre une couche de particules inorganiques disposée entre la couche de fibres et le séparateur poreux, de préférence dans lequel la couche de particules inorganiques inclut des particules inorganiques et un adhésif, de préférence dans lequel les particules inorganiques comprennent au moins un élément choisi dans un groupe consistant en $Al_2O_3$, $SiO_2$, $BaSO_4$, $TiO_2$, CuO, MgO, $LiAlO_2$, $ZrO_2$, nanotube de carbone, BN, SiC, $Si_3N_4$, WC, BC, AlN, $Fe_2O_3$, $BaTiO_3$, $Mo5_2$, $\alpha$-$V_2O_5$, $PbTiO_3$, $TiB_2$, $CaSiO_3$, tamis moléculaire, argile et kaolin, ou dans lequel l'adhésif est au moins un choisi dans un groupe consistant en fluorure de polyvinylidène, poly(fluorure de vinylidène-hexafluoropropylène), polyméthyl méthacrylate, polyacrylonitrile, polyimide, polyvinylpyrrolidone, polyoxyéthylène, alcool polyvinylique, carboxyméthylcellulose et caoutchouc de styrène butadiène.

**6.** Film composite selon la revendication 5, dans lequel la particule inorganique présente une taille de particule de 50 nanomètres à 3 microns, ou dans lequel la couche de particules inorganiques présente une épaisseur de 0,5 micron à 3 microns, ou dans lequel la couche de particules inorganiques est disposée sur chacune de deux surfaces du séparateur poreux.

**7.** Procédé de préparation d'un film composite selon l'une quelconque des revendications 1 à 6, comprenant les étapes de :

S1) fourniture d'un séparateur poreux;

S2) fourniture d'une solution de filage incluant un solvant, et un polymère de filage dissous dans le solvant et incluant du polyétherimide ; et

S3) préparation d'une couche de fibres sur le séparateur poreux au moyen de la solution de filage, et séchage de la couche de fibres pour obtenir le film composite comprenant le séparateur poreux et la couche de fibres disposée sur le séparateur poreux.

8. Procédé selon la revendication 7, dans lequel l'étape S1 comprend en outre la fourniture d'une couche de particules inorganiques disposée sur une surface du séparateur poreux, ou

dans lequel l'étape S1 comprend : la fourniture du séparateur poreux, et puis la préparation de la couche de particules inorganiques sur la surface du séparateur poreux ; et

l'étape S3 comprend : la préparation de la couche de fibres sur une surface de la couche de particules inorganiques, ou

dans lequel la couche de particules inorganiques est préparée par des étapes de : enduction d'une bouillie comprenant des particules inorganiques, un solvant d'enduction et un adhésif sur la surface du séparateur poreux, et séchage de la bouillie pour obtenir la couche de particules inorganiques sur la surface du séparateur poreux, ou

dans lequel la couche de particules inorganiques est préparée sur chacune de deux surfaces du séparateur poreux, et la couche de fibres est préparée sur chacune des couches de particules inorganiques préparées sur deux surfaces du séparateur poreux.

9. Procédé selon la revendication 7 ou 8, dans lequel le polymère de filage présente une concentration de 3 % en poids à 30 % en poids, dans la solution de filage.

10. Procédé selon l'une quelconque des revendications 7 à 9, dans lequel l'étape S2 comprend en outre la fourniture d'une solution de filage auxiliaire incluant un polymère auxiliaire, et

l'étape S3 comprend la préparation d'une couche de fibres sur le séparateur poreux au moyen de la solution de filage et de la solution de filage auxiliaire ;

de préférence dans lequel le polymère auxiliaire est au moins un choisi dans un groupe consistant en polyacrylonitrile, copoly(éther éther cétone), polyéther sulfone, polyamide-imide, acide polyamide et polyvinylpyrrolidone,

de préférence dans lequel un rapport en poids du polyétherimide sur le polymère auxiliaire est de (50-80):(20-50) à l'étape S3.

11. Procédé selon l'une quelconque des revendications 7 à 10, dans lequel à l'étape S3, la couche de fibres est préparée par un procédé de filage électrostatique haute vitesse ou un procédé auxiliaire de filage électrostatique dans un champ électrique,

de préférence dans lequel le procédé de filage électrostatique haute vitesse comprend : un filage électrostatique dans une condition dans laquelle un dispositif de collecte configuré pour collecter une fibre présente une vitesse de rotation de 1000 trs/min à 6000 trs/min, ou

dans lequel le procédé auxiliaire de filage électrostatique dans un champ électrique comprend :

le réglage d'une électrode auxiliaire sur une extrémité, à distance d'une extrémité de source pour la génération de fibre, d'un dispositif de collecte configuré pour la collecte de fibre, le dispositif de collecte présentant une tension de -60 kV à 0 kV, l'électrode auxiliaire présentant une tension inférieure ou égale à -60 kV, et une différence de tension existant entre l'électrode auxiliaire et le dispositif de collecte ; et le filage électrostatique ; ou l'utilisation d'une zone entre une extrémité de source pour la génération de fibre et un dispositif de collecte en tant que zone de filage, la zone de filage étant entre deux plans chargés qui sont parallèles l'un à l'autre, les deux plans chargés étant disposés dans une direction allant de l'extrémité de source au dispositif de collecte, une différence de tension entre les deux plans chargés étant inférieure ou égale à 60 kV, et puis le filage électrostatique.

12. Procédé selon la revendication 11, dans lequel l'étape S3 comprend des étapes de : formation d'un faisceau de fibres sur le séparateur poreux via le procédé de filage électrostatique haute vitesse ou le procédé auxiliaire de filage électrostatique dans un champ électrique, rotation du séparateur poreux, réalisation en continu du procédé de filage électrostatique haute vitesse ou du procédé auxiliaire de filage électrostatique dans un champ électrique et répétition des étapes ci-dessus au moins une fois pour préparer la couche de fibres sur le séparateur poreux, dans lequel la couche de fibres inclut de multiples groupes de faisceaux de fibres, les multiples groupes de faisceaux de fibres présentent différentes directions d'extension, ou

dans lequel le procédé de filage électrostatique haute vitesse est réalisé à une vitesse de rotation de 1000 trs/min à 2000 trs/min.

**EP 3 357 109 B1**

**13.** Procédé selon la revendication 11, dans lequel l'électrode auxiliaire comprend de multiples plaques d'électrode métalliques parallèles et fixées les unes aux autres, la plaque d'électrode métallique présente une longueur de 10 millimètres à 1000 millimètres et une largeur de 1 millimètre à 500 millimètres, une distance entre deux plaques d'électrode métalliques adjacentes est de 1 millimètre à 500 millimètres, et une distance entre l'électrode auxiliaire et le dispositif de collecte est de 1 millimètre à 1000 millimètres.

**14.** Procédé selon l'une quelconque des revendications 7 à 13, comprenant en outre : la pression du film composite sous une pression de 1 MPa à 15 MPa après que la couche de fibres est préparée.

**15.** Batterie au lithium, comprenant une électrode positive, une électrode négative et un film composite selon l'une quelconque des revendications 1 à 6 disposé entre l'électrode positive et l'électrode négative.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008018657 A
- US 20110236744 A
- KR 20140067370
- WO 2014100213 A
- US 20140287296 A
- US 20140272526 A
- EP 2169743 A
- JP 2002355938 A
- WO 2010130339 A